# EUROPEAN PATENT APPLICATION

(11) **EP 2 458 821 A1**
(43) Date of publication of application: **30.05.2012**
(21) Application number: 11190425.6
(22) Date of filing: 23.11.2011
(51) Int. Cl.: H04L 29/08, H04L 12/58

(54) **Methods and apparatus for point-and-click messaging**

(30) Priority: 24.11.2010 US 953717
(71) Applicant: Honeywell International, Inc., Morristown, NJ 07962-2245 (US)
(72) Inventor: Lakkamraju, Subrahmanyam Raju V., Morristown, NJ New Jersey 07962-2245 (US); Kuruva, Keshav, Morristown, NJ New Jersey 07962-2245 (US); Nehru, Kumaran, Morristown, NJ New Jersey 07962-2245 (US)
(74) Representative: Buckley, Guy Julian

(57) **Abstract**

Methods and systems are provided for communicating with elements of a complex system displayed on a web page comprising a electronic map and a plurality of icons disposed on the electronic map, each of the plurality of icons representing an element of the complex system and being situated on the electronic map so as to indicate each element's actual geographic location, each icon being associated with a messaging address. The method comprises invoking and receiving the web page and receiving an icon selection indication from a user via a human machine interface (HMI) device. The method includes generating a messaging dialog box based at least in part on the icon selection indication and one or more messaging addresses indicated thereby, receiving message content from the user; and transferring the message content to a data uplink for delivery to the messaging address.

## Description

### TECHNICAL FIELD

The present invention generally relates to Internet tracking and communications, and more particularly relates to communications with one or more elements of a complex system that includes truck fleets, aircraft fleets, or the like.

### BACKGROUND

Communication plays a major role in the proper management of a complex system. However, elements of the complex system may be distributed across a wide geographical region and may also include mobile units. Hence, the location of such units for communication purposes may be complicated.

Further, mobile elements may encounter various environmental conditions common to their proximity. For example, various different aircraft traveling flight plans originating in various locations may have a common destination or traverse a common area along their flight paths. Hence, a collection of aircraft may share the risk of adverse weather conditions or adverse political conditions (e.g. restricted or hostile air space) in a particular location. Currently, it takes significant time to identify the position of each aircraft, determine whether or not that aircraft's trajectory traverses an area of concern, and then communicate with the aircraft.

Accordingly, it is desirable to provide a user with a graphical representation that can present a graphical synopsis of the location and/or track of multiple elements of a complex system, such as a fleet of aircraft. In addition, it is desirable to provide a means for the user to address a message to those elements of interest using a simple point-and-click approach from the graphical representation Furthermore, other desirable features and characteristics of the present invention will become apparent from the subsequent detailed description of the invention and the appended claims, taken in conjunction with the accompanying drawings and this background of the invention.

### BRIEF SUMMARY

A method is provided for communicating with elements of a complex system represented on a web page by a plurality of icons disposed on an electronic map, each of the plurality of icons representing an element of the complex system and being situated on the electronic map so as to indicate each element's reported geographic location, each icon being associated with a messaging address. The method comprises requesting and receiving the web page and receiving an icon selection indication from a user via a human machine interface (HMI) device. The method includes generating a messaging dialog box based at least in part on the icon selection indication and one or more messaging addresses indicated thereby, receiving message content from the user; and transferring the message content to a data uplink for delivery to the messaging address.

A computer readable storage medium is provided for communicating with elements of a complex system displayed on a web page comprising an electronic map and a plurality of icons disposed on the electronic map, each of the plurality of icons representing an element of the complex system and being situated on the electronic map so as to indicate each element's actual geographic location, each icon being associated with a messaging address. The tasks include invoking and receiving the web page and receiving an icon selection indication from a user via a human machine interface (HMI) device. The Tasks further include generating a messaging dialog box based at least in part on the icon selection indication and one or more messaging addresses indicated thereby, receiving message content from the user; and transferring the message content to a data uplink for delivery to the one or more messaging addresses.

A system is provided for communicating with elements of a complex system displayed on a web page comprising an electronic map and a plurality of icons disposed on the electronic map, each of the plurality of icons representing an element of the complex system and being situated on the electronic map so as to indicate each element's actual geographic location, each icon being associated with a messaging address. The system comprises a network and a complex system in communication with the network and configured to report a geographic location of one or more elements thereof via the network. The system further comprises a network server in communication with the network configured to receive the geographic location of the one or more elements of the complex system from the network. The geographic locations are used to generate the web page. The system also includes a remote computing device in communication with the network that is configured to receive the web page invoked from the network server indicating the geographic positions of the elements of the complex system and is configured to generate a message addressed to one or more of the elements. The system also includes a data uplink configured to receive the message from the remote computing device and to transmit the message to the one or more addressed elements.

### BRIEF DESCRIPTION OF THE DRAWINGS

The present invention will hereinafter be described in conjunction with the following drawing figures, wherein like numerals denote like elements, and

FIG. 1 is a conceptual block diagram of a communication system in accordance with one embodiment;

FIG.2 is a depiction of an exemplary Tracking web page; and

FIG. 3 is a logic flow diagram of a communication method in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Persons skilled in the art may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

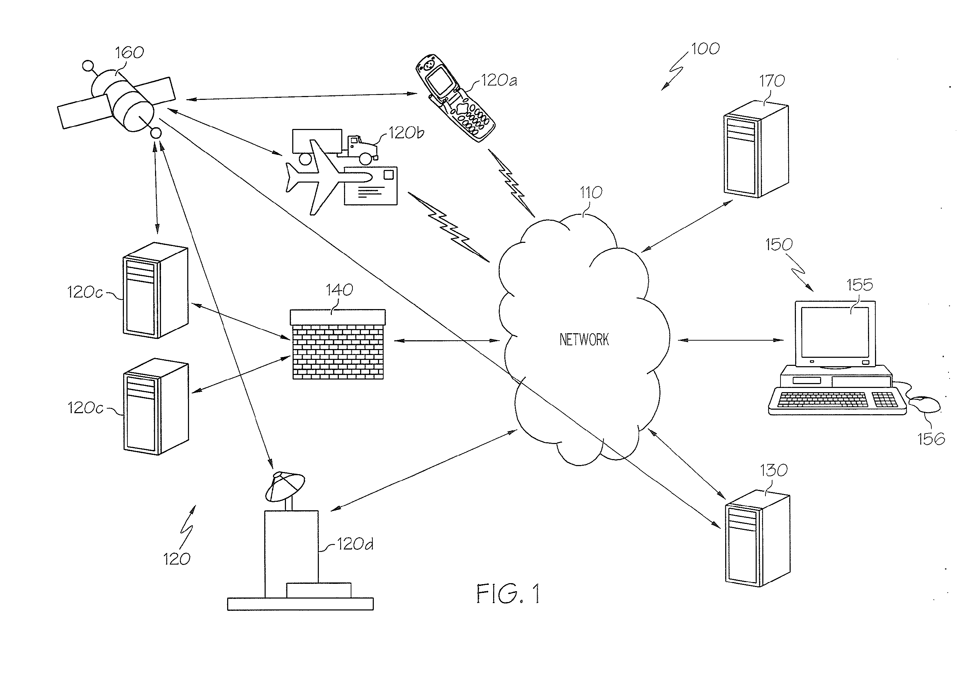

FIG. 1 is a simplified system diagram of an embodiment of the subject matter described herein. System 100 includes a network 110, which may include the Internet, an intranet, a virtual private network (VPN), a wireless network, a satellite network, a cellular telephone network, a packet switched telephone network (PSTN) or a combination thereof. The network 110 may be any suitable network currently in existence or that may be devised in the future to provide communication connectivity between two communicating devices.

System 100 includes a complex system 120. The complex system 120 may be any multi-element hardware system, organization of people, or a combination thereof. For example, the complex system 120 may be an industrial facility or a fleet of vehicles, each vehicle having a driver or a pilot. Further, each facility or vehicle may be an element of the complex system or may be a complex system itself with its communicable parts being elements.

The complex system 120 may be a corporation or other organization with a number of geographic locations 120d and a plurality of individuals associated with that organization. In such a case, a particular individual with a hand held computing device 120a may be an element of the complex system. Also, a particular facility, an office, or other location may be an element of the complex system instead of a particular person at that location.

The complex system 120 may also be a processing plant or machine where some portion of the complex system is operated by a computer. That is, some number of units comprising the complex system 120 may be computer-controlled and may be capable of receiving executable commands transmitted from a remote location 150. A computer controllable unit may be an element of the complex system 12.

The term "element" as used herein refers to a computing device or a person with access to a computing device that is capable of receiving and perceiving a text, video or audio message communicated over the network 110. Hence a person with a hand held computing device 120a is an exemplary element, as is an aircraft with a pilot or a security post with a computing device at a chemical plant. In one embodiment, an element may be a computer controlled electrical pump, the controller of which is configured to receive an executable text message and interpret the executable text message to thereby control the pump.

Some elements of a complex system may reside behind a network firewall 140. Hence, any messages to elements 120c located behind the firewall 140 will be required to be addressed to the gateway server (not shown) of the firewall 140 for further delivery to the elements 120c.

The system 100 also includes a data center 130 that receives geographical positioning data for each element 120a-d of the complex system 120 and tracks the geographical location of each element. Each element 120a-d may report its geographic position by any suitable means over network 110 or directly from a GPS satellite 160. The data center 130 may provide the geographic position of each element 120a-d of the complex system 120 to a network server 170. The network server 170 may be configured to compile an electronic map populated with the current positions of each element 120a-d of the complex system 120 and to transmit that electronic map to the remote computing device 150. A non-limiting example of a suitable network server 170 is the collection of Google Maps™ servers owned and operated by Google, Inc.

Remote computing device 150 may be any suitable computing device known in the art equipped with a graphical display device 155 such as a liquid crystal display (LCD) display, a light emitting diode (LED) display, or the like. The graphical display device 155 is configured to render a graphical user interface (GUI) for interacting with the user. Exemplary, non-limiting examples of a remote computing device 150 include a laptop computer, a desktop computer, a handheld computing device, or the like. The remote computing device 150 includes at least one human machine interface (HMI) 156 allowing a user to input various commands and data. The HMI 156 may be any suitable interface device that currently exists or that may be developed in the future. Non-limiting examples of an HMI include a mouse, a light pen, a keyboard, a touch screen, or the like.

The remote computing device 150 is in operable communication with the complex system 120, with at least one network server 170 and with the data center 130 via the network 110. A suitable protocol for such communications may be the transmission control protocol/Internet protocol (TCP/IP) for use over the Internet or an intranet. Other suitable exemplary protocols may include Code Division Multiple Access (CDMA) and Global System for Mobile Communications (GSM) for use with cellular networks. The listed network protocols are intended to be exemplary. Any suitable communication protocols that currently exist or that may de developed in the future are considered to be within the scope of this disclosure.

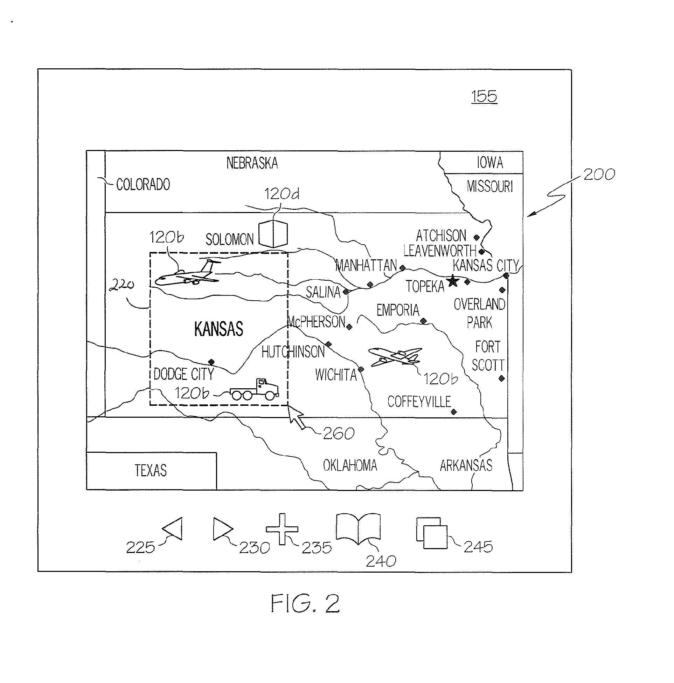

FIG. 2 illustrates an exemplary GUI 155 that may be rendered on the remote computing device 140, and comprises the electronic map 200 that is populated by the elements (120b, 120d) of the complex system 120. The exemplary electronic map presented is one of the State of Kansas and the surrounding areas. However, those of skill in the art will recognize that the electronic map may depict any particular geographical area.

The exemplary electronic map on GUI 155 is populated by four exemplary elements represented by two aircraft and a truck (each 120b) and a stationary building element 120d. By pointing to an element 120a-d with the cursor 260 and clicking with the HMI device 156, an element 120a-d may be selected for communication. Similarly, by otherwise marking multiple elements 120a-d as may be known in the art, multiple elements may be selected for communication. In the particular GUI depicted, multiple elements have been selected by enclosing the elements of concern in a box 220 by clicking at one location on the electronic map 200 and dragging the cursor to a second location, thereby completing the box. In equivalent embodiments, elements may be selected individually by conventional point and click methods. In some embodiments, the GUI 155 may include GUI control icons (225, 230, 235, 240 and 245). Non-limiting examples of GUI control icons may include map controls 225, cursor control 235, file control 240 and copy 245.

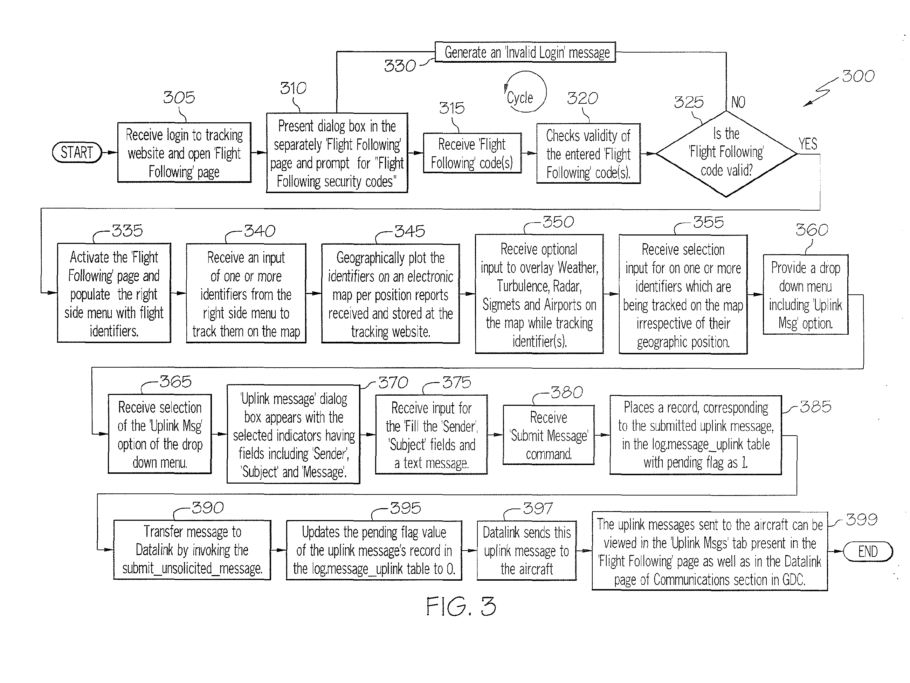

Figure 3 is a logic flow diagram of a method 300 for providing point-and-click messaging to elements 120a-c of complex system 120. The exemplary method 300 is presented in the context of an airline communicating with various elements (120b, 120d) of its aircraft fleet and related ground assets. Other equivalent embodiments may address other types of complex systems and their elements, such as unmanned aerial vehicles, a group of individuals, or a power plant.

At process 305, the user of the remote computing device accesses the network server 170 using any number of communications protocols known in the art. As a non-limiting example, the user of the remote computing device 150 may launch a web browser and request a "Tracking" web page for rendering GUI 155. At process 310-330, an authorization and password is entered into a dialog box opened in the Tracking web page, after which the appropriate codes and/or passwords are entered and validated, as is known in the art. If the Tracking authentication information is determined not to be valid at decision point 325, then an "invalid login" message is rendered to the user on display GUI 155 at process 330.

At process 335, the Tracking web page is activated and a portion of the page is populated by a list of element identifiers. In some embodiments that list of element identifiers may be aircraft tail numbers listed in a sub-menu window on the right side of the Tracking web page.

At process 340, the user selects one of more of the element identifiers from the sub-menu, at which point an icon for each element (120b, 120d) (i.e. and aircraft) is rendered on the electronic map at process 345. Because the geographic position of the selected element is updated periodically via the data center 130 and the network server 170, the element icon may move across the electronic map. In some embodiments, multiple or all of the identifiers may be instantiated on the electronic map by a "select all" function or similar selection functionality.

In some embodiments, the Tracking web page may provide the user with an option to overlay symbology representing weather, turbulence, radar returns, flight path segments and/or airports over the electronic map. As such, the movement of identifier icons may be viewed on the Tracking web page electronic map relative to this additional graphical information. Information for these various overlays may be supplied by various vendors and other sources.

At process 355, the remote computing device may receive selection indications from the user, as to which of the activated icons are desired to be communicated with. An exemplary, non-limiting example of such an indication may be received via the HMI 126. HMI 126 may be a mouse wherein a right or left click may select the element icon closest to cursor 260. In equivalent embodiments, the indication may be a box created around multiple element icons by using a conventional click-and-drag motion. The actual indication technique will depend upon the type of HMI 156 selected for use in a particular design situation.

At process 360, a drop down menu may be rendered to the user after the desired element icons are selected. The drop down menu may include an option to "uplink a message" to the complex system elements that are represented by the selected element icon(s). However, in other equivalent embodiments, the invocation of an uplink message may be accomplished by other means known in the art such as manipulating a virtual button or other virtual control device.

At process 365 the invocation of the "uplink message" function is received and an "uplink message" dialog box may be rendered on the GUI 155 for the user to compose a message at process 370. The "uplink dialog box" may include alphanumeric text input fields that accept data input from the user including, but not limited to, the sender, the message subject, and the message itself. The "uplink message" dialog box may be created on the remote computing device using a variety of techniques, such as browser plug-ins and/or client-side web software (such as HTML5/CSS/Javascript). In accordance with a particular embodiment, one or more elements of GUI 155 are generated using Javascript code loaded by the browser, along with one or more Javascript frameworks or libraries -- e.g., jQuery or the like.

The message may be sent using a variety of methods and protocols, including, for example, e-mail (e.g., SMTP, POP3), HTTP, Multimedia Messaging Service (MMS), or Short Message Service (SMS).

In some embodiments the "uplink message" dialog box allows the user to include audio, video and data file attachments. In embodiments where multiple element addressees are included, each addressee may be displayed either individually or under a group address (i.e. "Squadron 143"). At process 375, the user fills in the input fields and attaches any additional files, if appropriate.

The user indicates that the message is to be submitted by interacting with a physical or virtual button, for example, a user interface button labeled "submit message" or the like. At process 380 the remote computing device 150 receives the "submit message" command and creates a message record corresponding to the uplinked message in a file or table (e.g., a "log.message_uplink" table) and sets a flag indicating a pending message to "1". In one embodiment the pending message flag is a "0", and otherwise non-pending messages are indicated by a "1."

At process 390, a scheduled action (e.g., a "cron job") monitors the "log.message_uplink" table periodically, copies all records with a "pending" indicator set, and passes the records to a data uplink 180 via the network 110. In some embodiments this may be done by invoking a "submit_unsolicited_message" command. As is known in the art, a cron job or cron subroutine is a time-based job scheduler used in computer operating systems that enables users to schedule jobs (commands or shell scripts) to run periodically at certain times or dates. It is commonly used to automate system maintenance or administration, though its general-purpose nature means that it can be used for other purposes, such as connecting to the Internet and downloading messages.

After passing the pending messages to the data uplink 180, at process 395 the cron job resets the pending message indicator to "0" for each pending message sent to the data uplink 180. At process 397, the data uplink sends the pending messages to the selected complex systems elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for communicating with elements of a complex system displayed on a web page that includes an electronic map and a plurality of icons superimposed on the electronic map, each of the plurality of icons representing one of the elements and indicating that element's actual geographic location, each icon being associated with a messaging address, the method comprising:
requesting and receiving the web page;
receiving an icon selection indication from a user via a human machine interface (HMI) device, the icon selection indication being associated with one or more selected icons;
generating a messaging dialog box based at least in part on the icon selection indication and one or more messaging addresses associated with the selected icons;
receiving message content from the user; and
transferring the message content to the one or more messaging addresses.

2. The method of claim 1, wherein receiving the icon selection is accomplished by one of detecting at least one point-and-click of a mouse, detecting an area box drawn by clicking and dragging using a mouse, whereby multiple icons may be selected as a group, and detecting a 'select all' indication from the user.

3. The method of claim 1, wherein the HMI is a touch screen.

4. The method of claim 1, wherein the message content is a text file including executable text.

5. The method of claim 4, wherein the message content is formatted as one of e-mail, a Short Message Service (SMS) message and a tweet.

6. The method of claim 1, wherein the message content includes at least one of an audio file and a video file.

7. The method of claim 1 wherein the messaging address is one of an IP address and a cellular telephone number.

8. The method of claim 1, wherein transferring the message content is accomplished by a cron subroutine.

9. A system for communicating with elements of a complex system displayed on a web page comprising a electronic map and a plurality of icons disposed on the electronic map, each of the plurality of icons representing an element of the complex system and being situated on the electronic map so as to indicate each element's actual geographic location, each icon being associated with a messaging address, comprising:
a network;
a complex system in communication with the network and configured to report a geographic location of one or more elements thereof via the network;
a network server, in communication with the network and configured to receive the geographic location of the one or more elements of the complex system from the network from which to generate the web page;
a remote computing device in communication with the network and configured to receive the web page invoked from the network server indicating the geographic positions of the elements of the complex system and to generate a message addressed to one or more of the elements; and
a data uplink configured to receive the message from the remote computing device and to transmit the message to the one or more addressed elements.

10. The method of claim 9, wherein the message content is transferred to the uplink by a cron subroutine.

11. The computer readable storage medium of claim 10, wherein the message address is one of an IP address and a cellular telephone number.
